(19) Europäisches Patentamt
European Patent Office
Office européen des brevets

(11) Publication number: **0 082 518 B1**

(12) **EUROPEAN PATENT SPECIFICATION**

(45) Date of publication of patent specification: **20.11.86**

(51) Int. Cl.$^4$: **G 01 N 27/30**

(21) Application number: **82111817.1**

(22) Date of filing: **20.12.82**

(54) **Hemispherands in ion-sensitive compositions.**

(30) Priority: **21.12.81 US 332904**

(43) Date of publication of application:
**29.06.83 Bulletin 83/26**

(45) Publication of the grant of the patent:
**20.11.86 Bulletin 86/47**

(84) Designated Contracting States:
**DE FR GB**

(56) References cited:
**US-A-4 214 968**

**JOURNAL OF THE AMERICAN CHEMICAL SOCIETY, vol. 101, no. 13, June 1979, E. KOENIG et al."Host-Guest complexation. 16. synthesis and cation binding characteristics of macrocyclic polyethers containing convergent methoxyaryl groups", pages 3553-3566**

**JOURNAL OF THE AMERICAN CHEMICAL SOCIETY, vol. 103, no. 20, October 1981 D.J. CRAM et al. "Augmented and diminished spherands and scales of binding", pages 6228-6232**

(73) Proprietor: **EASTMAN KODAK COMPANY**
**343 State Street**
**Rochester New York 14650 (US)**

(72) Inventor: **Toner, John Luke**
**1340 State Road**
**Webster New York 14580 (US)**
Inventor: **Daniel, Daniel Salman**
**3051 St. Paul Blvd.**
**Rochester New York 14617 (US)**

(74) Representative: **Brandes, Jürgen, Dr.rer.nat. et al**
**Thierschstrasse 8**
**D-8000 München 22 (DE)**

(56) References cited:
**JOURNAL OF THE AMERICAN CHEMICAL SOCIETY, vol. 104, no. 24, December 1982 D.J. CRAM et al. "Hemispherands containing cyclic urea and anisyl units", pages 6827-6828**

**JOURNAL OF THE AMERICAN CHEMICAL SOCIETY, vol. 101, no. 22, October 1979 D.J. CRAM et al. "Spherands-ligands whose binding of cations relieves enforced electron-electron repulsions"; pages 6752-6754**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 082 518 B1

(58) References cited:

JOURNAL OF THE AMERICAN CHEMICAL SOCIETY, vol. 103, no. 13, July 1981 R.C. HELGESON et al. "Synthesis and complexing properties of chiral macrocycles containing enforced cavities", pages 3929-3931

RESEARCH/DEVELOPMENT MAGAZINE, vol. 25, no. 3, March 1974 E. PRETSCH et al. "Design of ion carriers and their application in ion selective electrodes", pages 20-23

**Description**

This invention relates to ion-sensitive compositions. These compositions are useful as ion-sensitive membranes. In one particularly preferred embodiment, the compositions are used as ion-selective membranes which are capable of selectively transporting a first ion in preference to a second ion. These membranes are useful in ion-sensitive or -selective electrodes of various types.

A great variety of electrodes and structures for the measurement of various ions in solution are known. Usually, devices for ion concentration measurements include a reference electrode and a separate ion-sensitive electrode. When these two electrodes are simultaneously immersed in the same body of solution to be analyzed, a potential develops across the electrodes which is proportional to the concentration in solution of the ion to which the ion-sensitive electrode is sensitive. Frequently, it is desirable to measure the concentration of one ion in a solution which contains that ion and another ion. In such a situation, it is necessary that the ion-sensitive composition of the electrode be capable of selectively transporting the first ion in preference to the second ion. An electrode with this type of membrane is referred to in the art as an ion-selective electrode.

One well-known type of ion-sensitive electrode comprises an electrode body (usually a glass container) containing a known reference composition in contact with a half-cell of known potential (a reference electrode) and an ion-selective glass membrane located in an aperture in the electrode body. The ion-selective membrane is mounted in such a fashion that, when the electrode is immersed in the unknown solution, the membrane contacts both the reference solution, the membrane contacts both the reference solution within the electrode body and the unknown solution. A metal probe coated with a layer of insoluble salt of the metal in the reference solution serves as the reference electrode and is immersed in the reference solution. This metal probe also serves as one of the contacts for measuring the potential between the electrodes and provides a reference potential for the electrode. The sensitivity of the electrode to an ion in solution is determined by the composition of the glass membrane. This type of electrode is referred to in the art as a "barrel" type of electrode.

In addition to the glass membranes, polymeric ion-sensitive membranes are also known. These membranes generally comprise a polymeric binder or support as the supporting matrix which is impregnated with a solution of an ion-sensitive carrier in a solvent for the carrier. The ion-sensitive carrier is a compound which is capable of complexing the desired ion, transporting the ion through the composition and releasing the ion. This compound is referred to in this art as an ionophore or ion carrier. By careful selection of the ionophore, solvent, etc., membranes of this type can be custom designed to selectively sense a particular ion in solution in preference to other ions which might also be in the solution.

Many compounds are known which are capable of selectively complexing ions from solution. However, many of these compounds are not useful as ionophores because they lack other properties which are essential for ionophores. For example, the ionophore must be capable, not only of complexing the ion from the solution, but also of transporting the ion across the membrane and then decomplexing the ion into the solution on the other side of the membrane. Further, the steps (complexing, transport and decomplexing) must be sufficiently rapid to obtain a measurable potential in reasonable time. Crown ethers, for example, are well-known ion-complexing compounds. Many crowns are not useful ionophores in aqueous environments. Further, of those which are useful in some simple aqueous environments, none is useful in complex solutions such as blood serum.

A significant advance in the ion-selective electrode art is the dry-operative electrode described in U.S. Patent 4,214,968 to Battaglia et al. Prior to the discovery by Battaglia et al of dry-operative ion-selective electrodes, electrodes had to be either stored in an aqueous solution or treated with aqueous solution just prior to use in an ion-activity-determining operation. Battaglia et al describe dry-operative ion-selective electrodes. The electrodes comprise:

(a) a dried internal reference (including the reference electrode and the reference composition) and,

(b) in contact with the reference, a hydrophobic ion-selective membrane.

The term "dry-operative" describes an ion-selective electrode which provides reproducible potentiometric determination of ion activity which is related to the ion concentration of an aqueous test solution with no requirement for wet storage or preconditioning prior to use.

One of the specific ion-selective electrodes disclosed in the examples of Battaglia et al is a sodium ion-selective electrode using methyl monensin as the sodium-selective ionophore. While methyl monensin is a useful ionophore for a variety of purposes, still further improvements, particularly in the selectivity of the ionophore for sodium over potassium, are desired. For example, methyl monensin is useful in the determination of sodium in blood serum because blood serum usually contains a relatively low level of potassium. A higher degree of selectivity of sodium over potassium is desirable for the determination of sodium in urine because of the generally higher concentration of potassium in urine than in serum.

As noted above, there are relatively few classes of compounds which are known to be useful ionophores in ion-sensitive compositions. Further, many of the compounds which are known to be ion-sensitive are naturally occurring compounds which are expensive and difficult to isolate. It is apparent that there is a continuing need for new ion-sensitive compositions. It is particularly advantageous if this new class of ion-sensitive compositions contains compounds which are highly selective for certain ions in solution.

It is the object of the present invention to provide compositions which contain alternative ionophores. This object is acomplished by providing an ion-sensitive composition, particularly for use in an ion-sensitive electrode, including an ionophore, a compound capable of solvating the ionophore and a supporting matrix, characterized in that said ionophore is a lipophilic hemispherand compound. The composition is useful as an ion-sensitive membrane. The composition is capable of complexing an ion from solution, transporting the ion from one side of a membrane to another side of a membrane, and releasing the compound to a second solution. In certain embodiments, the hemispherands act as highly selective ionophores and are capable of transporting one ion across a membrane in preference to a second ion in the solution. The fact that hemispherands are useful in the described ion-sensitive compositions is particualrly surprising because extremely closely related compounds, namely, the spherands, do not function as ionophores in the same manner. This is shown in the comparative example.

In preferred embodiments, the solvating compound is a hydrophobic carrier solvent. A particularly preferred supporting matrix is a hydrophobic polymer binder.

In preferred embodiments of the present invention, there is provided an ion-selective membrane composition capable of selectively transporting a first metal ion in preference to a second metal ion, said composition comprising a lipophilic hemispherand ionophore, a compound capable of solvating the ionophore and a supporting matrix, wherein the hemispherand has a $\Delta G$ of complexation with the first ion which is at least 0.3 kcal/mole greater than the $\Delta G$ of complexation with the second ion. 1 kcal = 4,19 kJ.

The compositions described above are also useful in ion-sensitive electrodes. Thus, there is provided an ion-sensitive electrode comprising:

(a) a reference electrode in contact with

(b) a reference composition in contact with one side of

(c) an ion-sensitive membrane composition comprising an ionophore which is a lipophilic hemispherand compound, a compound capable of solvating the hemispherand compound, and a supporting matrix.

The described compositions are also useful in dry-operative ion-selective electrodes. Thus, there is provided a dry-operative ion-selective electrode comprising:

(a) a dried internal reference element comprising a reference electrode in contact with the dried residue of a solution of a salt and a hydrophilic polymeric binder in a solvent for the polymer and the salt and,

(b) in contact with the reference element, a hydrophobic ion-selective membrane of predetermined uniform thickness in regions thereof intended for contact with a sample for analysis, the membrane comprising the ion-sensitive composition of the invention.

As noted, the present compositions are particularly useful in an ion-sensitive electrode and this use will be described in detail. However, it will be understood that the compositions have other uses. For example, the supporting matrix can be in the form of porous beads containing the ionophore and solvent. These beads can be used to extract and recover ions from solution in a batch mode. The compositions can also be in the form of a membrane and can be used to extract ions from solution continuously.

Hemispherands and related compounds are compounds which were first developed by Dr. D. J. Cram and his coworkers. (See *Journal of the American Chemical Society,* 101:22, October, 1979, and 101:13, June 1979; *JCS Chem. Comm.,* page 948, 1979.) Hemispherands and closely related spherands are compounds which are known to be capable of complexing ions. Unlike many types of compounds which are capable of complexing ions, hemispherands have properties which make them useful as ionophores in a supporting matrix, along with a solvating compound to provide mobility. The closely related spherand compounds do not have these necessary properties.

A hemispherand is a macrocylic compound wherein at least a portion of the macrocylic ring contains contiguous rigid cyclic units, at least some of these units having coordinating sites for ions. The rigid cyclic units are sufficient in number to rigidize a portion of the macrocyclic ring structure. The coordinating sites in the cyclic units are oriented so as to face the interior of the macrocycle, thereby forming at least part of the rigidized cavity in the molecule for receiving ions. Hemispherands are distinguished from known crown ethers and cryptands (other classes of macrocyclic compounds known to complex ions) in that they are structurally much more rigid than these other complexing compounds. Crowns and cryptands change conformation during complexation. Hemispherands and spherands, on the other hand, owe their complexing capacity to an at least partially rigidized cavity which is lined by rigidized groups capable of forming coordinate bonds with the ion to be bound. Because the cavity is at least partially rigidized, there is reduced configurational change on complexation. The term "spherand" is reserved for those compounds wherein the entire macrocylic ring structure consists of contiguous rigid cyclic units. In a hemispherand, the portion of the macrocyclic ring structure which is not made up of contiguous rigid cyclic units is made up of any other units or units, but preferably these other units also contain coordinating sites.

By the term "rigid cyclic unit" is meant a cyclic structure having a coordinating group in or appended to one position on the ring wherein the cyclic unit is connected to the macrocyclic structure through bonds adjacent the coordinating site position. This connecting bond-coordinating site-connecting bond structure limits the freedom of the cyclic unit to move, i.e., rotate or fold, in the molecule. If three or more of these units are in contiguous positions in the macrocyclic structure, that portion of the macrocyclic structure is rigidized because the freedom of each cyclic unit to move is substantially eliminated. Furthermore, this

structure, having the coordinating site between and adjacent the connecting bonds, serves to rigidly orient the coordinating sites toward the interior of the macrocycle.

Useful rigid cyclic units having coordinating sites are derived from compounds such as anisole, methoxycyclohexane, pyridine, pyrimidine, pyridine oxide, pyrimidene oxide, tetrahydropyrimidine, hexahydropyrimidine, hexahydro-2-oxopyrimidine, cyclic urea, benzoquinone, cyclohexanone, cyclic sulfoxides, cyclic phosphene oxides, cyclic amides, cyclic sulfones, furan, tetrahydrofuran, thiophene and tetrahydrothiophene.

Lipophilic hemispherands are hemispherands which contain no water solubilizing groups such as carboxylic acid groups or sulfonic acid groups, or which contain sufficiently large oil-soluble groups to render the molecule oil-soluble, e.g., capable of forming a 4 percent by weight solution of the hemispherand in a hydrophobic organic solvent.

In particularly preferred embodiments, the lipophilic hemispherand is represented by the structural formula:

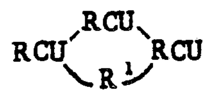

wherein each RCU is a rigid cyclic unit individually selected from the group consisting of units of the structure:

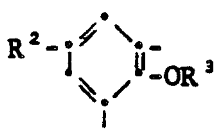 , 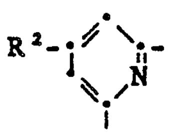 , 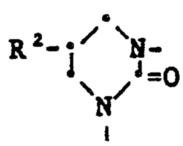 and 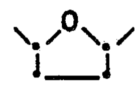

wherein $R^2$ is hydrogen or a group selected from alkyl, including substituted alkyl, preferably containing from 1 to 12 carbon atoms such as methyl, ethyl and isopropyl; alkenyl, including substituted alkenyl, preferably containing from 1 to 12 carbon atoms such as allyl, vinyl and 1-propenyl; cycloalkyl, including substituted cycloalkyl, preferably containing from 3 to 10 carbon atoms, such as cyclopropyl and cyclohexyl; aryl such as phenyl including substituted phenyl such as tolyl, xylyl and methoxyphenyl and such groups containing heteroatoms or containing heteroatom substituents such as dimethylamino, nitro, methoxy and sulfonyl methyl; $R^3$ is an alkyl, including substituted alkyl, or alkenyl, including substituted alkenyl, group such as those defined for $R^2$ or, when taken together with an $R^3$ group from another RCU, forms an alkylene group preferably of about 1 to 10 carbon atoms such as methylene, ethylene, propylene, tetramethylene or such groups interrupted with hetero atoms such as oxydiethylene and oxydipropylene; and $R^1$ represents the atoms necessary to complete a macrocyclic ring structure, preferably having from 14 to 24 atoms in the ring structure, with the proviso that $R^1$ contains (a) at least one coordinating site for ions and (b) at least two alkylene groups as part of the ring structure. Useful $R^1$ groups include oxybis(alkylene) such as oxybis(ethylene), oxybis(ethyleneoxymethylene) and oxybis(ethyleneoxyethylene); and groups containing one or more RCU groups such as 2,6-pyridylenebis(methyleneoxymethylene), 2-methyoxy-5-methyl-1,3-phenylenebis(methylenenoxymethylene) and 1,10-phenanthroline-2,9-ylenebis(methyleneoxymethylene).

HS 1—4

Examples of hemispherands within the scope of this structure include:

HS 1: 3,3″-oxybis(ethyleneoxymethylene)-2,2′,2″-triethoxy-5,5′,5″-trimethyl-1,1′:3′1″-terphenyl

HS 4: 3,3″-oxybis(ethyleneoxymethylene)-2,2″-ethoxy-2′-propoxy-5,5′,5″-trimethyl-1,1′:3′,1″-terphenyl

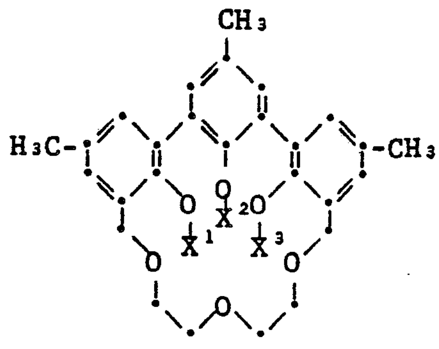

HS 1: $X^1$, $X^2$, $X^3$ = methyl
HS 2: $X^1$, $X^2$, $X^3$ = propyl
HS 3: $X^1$, $X^2$, $X^3$ = isopropyl
HS 4: $X^1$ and $X^3$ = ethyl and
$X^2$ = propyl

HS—5

HS 5: 3,3″-oxybis(ethyleneoxymethylene)-2′-methoxy-2,2″-trimethylenedioxy-5,5′,5″-tri-methyl-1,1′:3′,1″-terphenyl

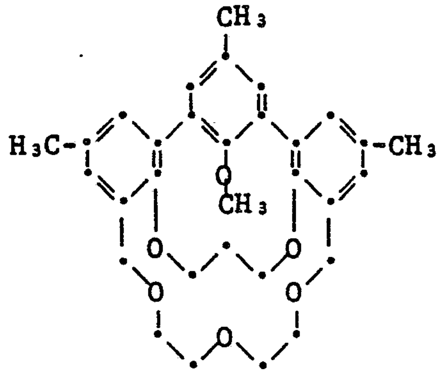

HS 6—7

HS 6: 3,3″-oxybis(ethyleneoxymethylene)-2,2″-pentamethylenedioxy-2′-ethoxy-5,5′,5″-trimethyl-1,1′:3′1″-terphenyl

HS 7: 3,3″-oxybis(ethyleneoxymethylene)-2,2″-pentamethylenedioxy-2′-allyloxy-5,5′,5″-trimethyl-1,1′:3′1″-terphenyl

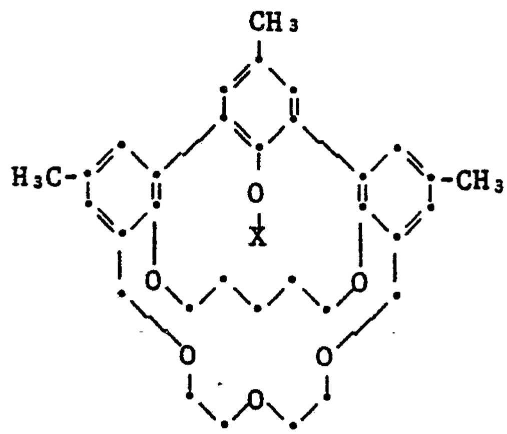

HS 6: X = ethyl
HS 7: X = allyl

HS 8—9

HS 8: 3,3″-(2,6-pyridylene)bis(methyleneoxymethylene)-2,2′,2″-triethoxy-5,5′,5″-trimethyl-1,1′:3′,1″-terphenyl

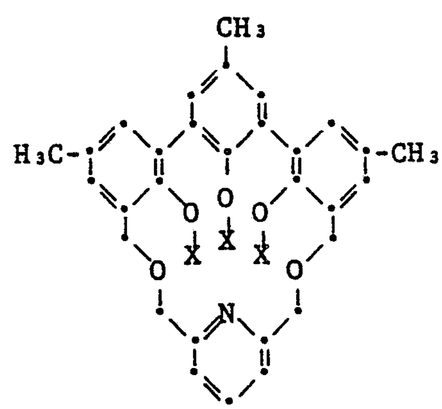

HS 8: X = ethyl
HS 9: X = methyl

HS-10

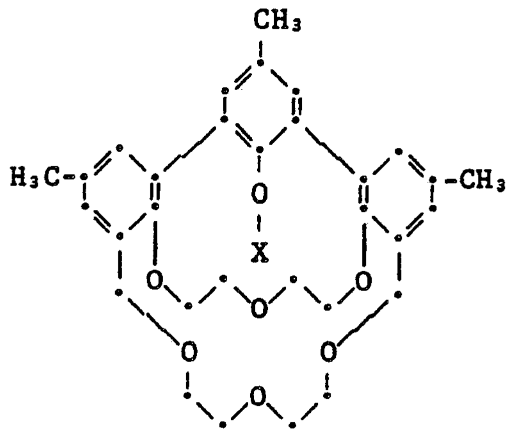

X = allyl

HS-11

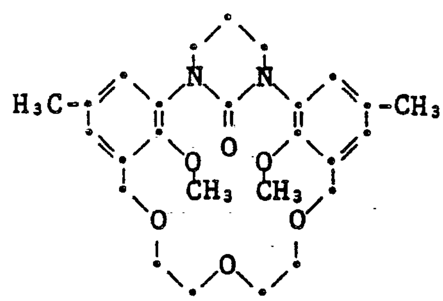

HS-12

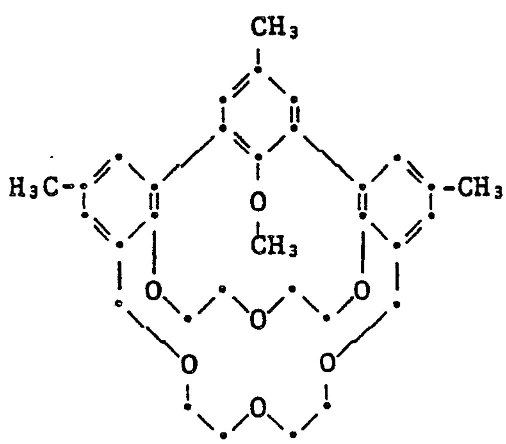

HS-13

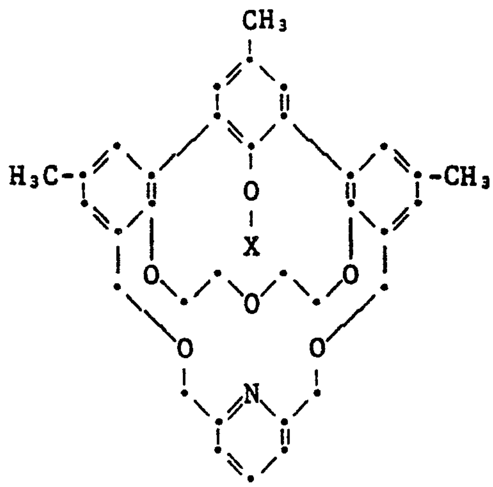

X = allyl

HS-14

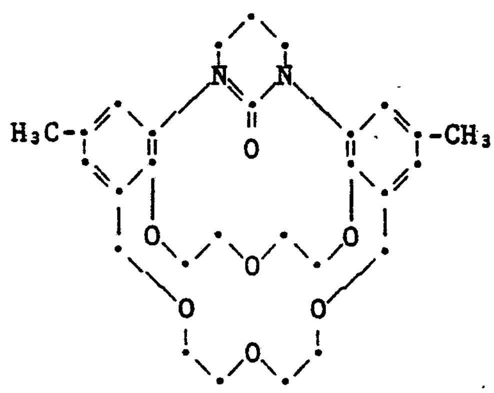

HS-15

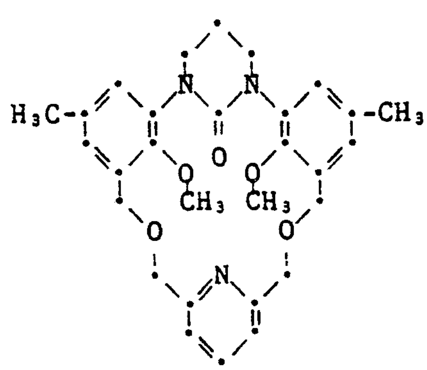

HS-16

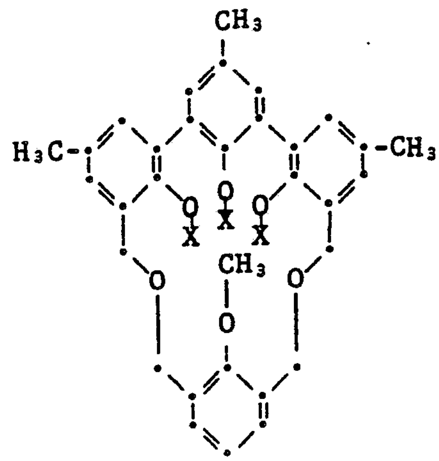

X = ethyl

HS-17

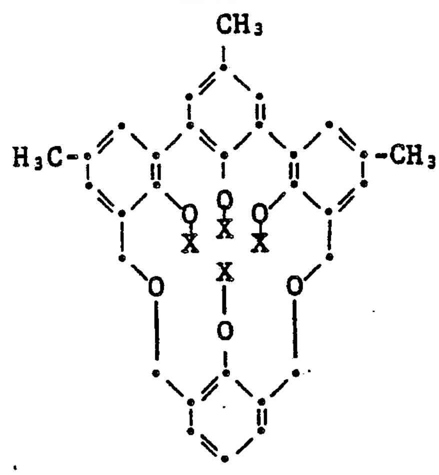

X = ethyl

HS 18-19

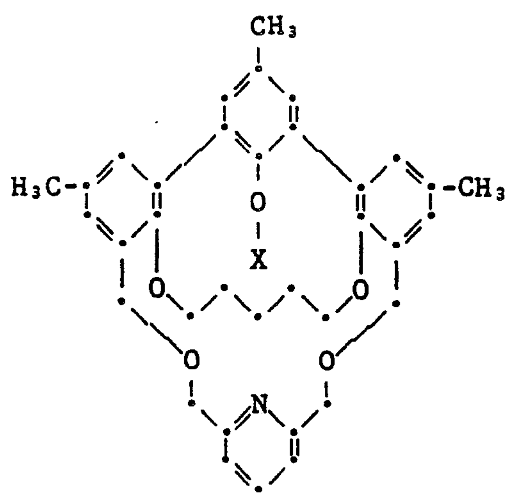

HS 18: X = allyl

HS 19: X = ethyl

HS-20

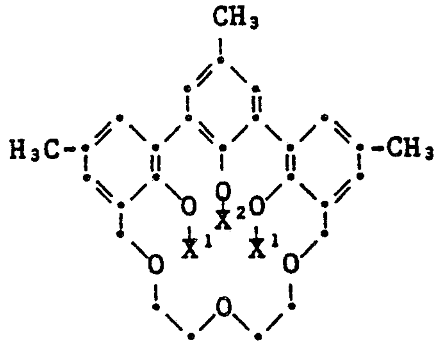

$X^1$ = propyl
$X^2$ = ethyl

HS-21

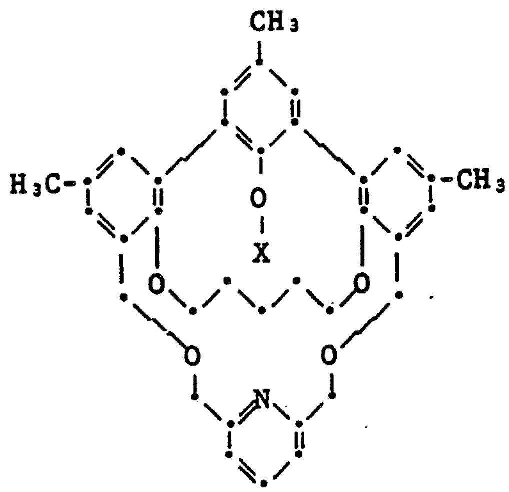

X = $CH_2C_6H_5$

HS-22

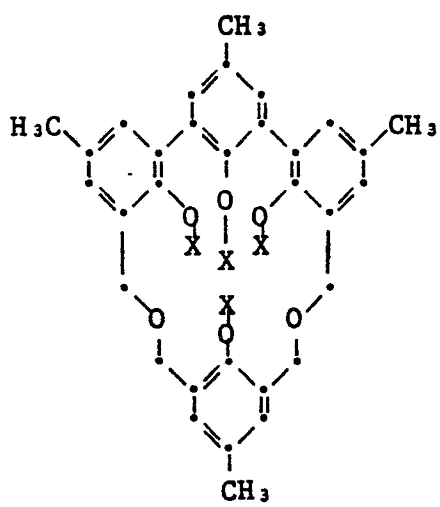

X = methyl

HS-23

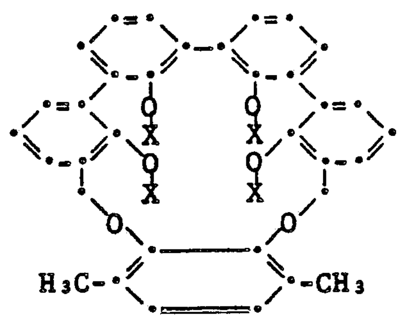

X = methyl

HS-24

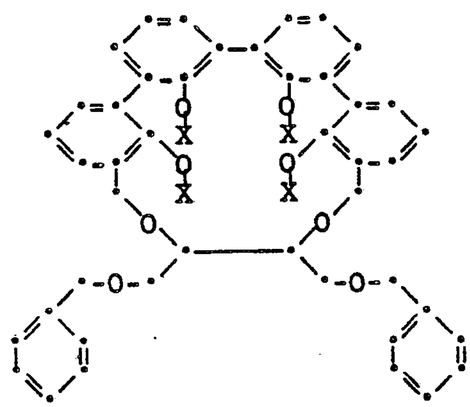

X = methyl

HS-25

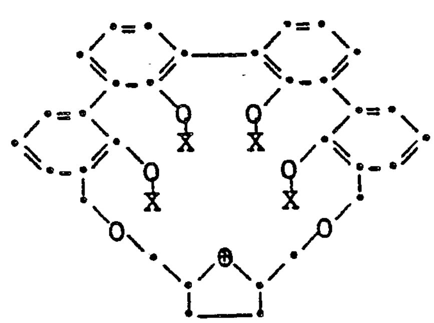

X = methyl

The hemispherands which are useful in the compositions of the present invention are made using methods which are known in the art or by modifications of such methods which would be apparent to those of skill in the art. The procedure of Cram et al, *Journal of the American Chemical Society,* 101, 3553—66 (1979), is useful. By the appropriate variation of starting materials and other reagents, a wide variety of hemispherands can be made.

In many embodiments, it is desirable that the hemispherand be able not only to transport an ion across a membrane but to do so selectively; that is, the hemispherand desirably is able to transport one ion in solution in preference to other ions which might also be present in the same solution. In preferred embodiments, the hemispherand is selective for one metal ion, usually an alkaline earth metal, in

preference to a second metal ion. For example, in body fluids such as blood serum and urine, both potassium and sodium are present and it is necessary to measure the concentration of one, independent of the concentration of the other.

One particularly useful measure of the selectivity of a compound such as a hemispherand is the ΔΔG. The ΔG for any particular ion is the free energy of complexation when that ion complexes with the hemispherand. The ΔΔG is the difference between the ΔG for one ion and the ΔG for the second ion. We have found that a hemispherand is capable of selectively transporting a first ion in preference to a second ion in an ion-selective membrane if the ΔG of complexation with the first ion is at least 0.3 kcal/mole greater than the ΔG of complexation with said second ion; that is, the ΔΔG is at least 0.3. In particularly preferred embodiments, the ΔΔG is at least 0.5 kcal/mole for sodium in preference to potassium. Hemispherands HS1, HS4, HS5, and HS7 meet this criteria and are therefore preferred.

The free energies of complexation referred to herein are measurd by the method described by Dr. Cram and his coworkers (Timko et al, *J. Amer. Chem. Soc., 99,* 4207 (1977); Newcomb and Cram, *J. Amer. Chem. Soc., 97,* 1257 (1975); Moore et al, *J. Amer. Chem. Soc., 99,* 6398 (1977); Helgeson et al, *J. Amer. Chem. Soc., 101* 4928 (1979)). Salts of the ion of interest are distributed between an aqueous and an organic phase in the absence and presence of the hemispherand. The amount of ion in any particular solution is determined by UV or NMR spectroscopy. Using this data, the amount of ion which is drawn into the organic phase by the hemispherand is determined which is related to the association constant Ka for the ion and the hemispherand. The free energy of complexation is then obtained by the formula $\Delta G = -RT\ 1n\ l/Ka$. (R is the gas constant and T is the absolute temperature.) If the Ka for a given ion is calculated relative to a reference ion, the ΔΔG for reference ion in preference to the given ion is simply $-RT \ln l/Ka$. The values for ΔG herein are in kcal/mole at 25°C measured with $CDCl^3$ saturated with $D^2O$.

In addition to the lipophilic hemispherand, the compositions of the present invention include a compound which is capable of solvating the hemispherand. Solvation is necessary so that the ion can be transported through the membrane by the solvated hemispherand. In some embodiments, a polymer binder which is capable of solvating the hemispherand is selected. If the polymer is capable of dissolving, at least partially, the hemispherand, it is useful in this embodiment. Polymers which are useful in this embodiment are described in U.S. Patent 3,419,634. The preparation of conventional ion-sensitive membranes using these polymers is described in U.S. Patent 3,743,588. In these embodiments, the polymer functions as both the compound which is capable of solvating the hemispherand and the carrier matrix for the composition.

In other embodiments, the compound which is capable of solvating the hemispherand is a separate organic solvent. In these embodiments, the carrier matrix is a separate component. The carrier matrix must allow for the transport of the ion which is bound to the hemispherand in the organic solvent. For example, a porous glass support is useful as the carrier matrix. In these embodiments, the hemispherand is dissolved in the organic solvent and then the resulting solution is imbibed into the porous glass support to provide an ion-sensitive membrane. In other embodiments, the solution of the hemispherand is dispersed in a hydrophobic binder. By "hydrophobic" is meant substantially water insoluble. The binder dispersion is coated and dried to produce an ion-sensitive composition according to the present invention.

Where a separate solvent is used to solvate the hemispherand, the solvent is any of a wide variety of solvents, provided that it is capable of at least partially dissolving the hemispherand. The solvent, referred to in the art as a carrier solvent, provides ion mobility in the membrane. If a hydrophobic binder is used, the solvent must be compatible with the binder. Useful carrier solvents are hydrophobic organic solvents including phthalates, sebacates, aromatic and aliphatic ethers, phosphates, mixed aromatic aliphatic phosphates, adipates, nitrated ehters or esters and mixtures of these solvents. Particularly useful solvents include bis(2-ethylhexyl)sebacate, 4-nitrophthalate, *o*-nitrophenyl valerate, dioctylphenylphosphonate, *o*-nitrophenyl phenyl ether, *o*-nitrophenyl octyl ether and tris(2-ethylhexyl)phosphate.

If the hemipsherand is included in a carrier solvent as described above, a membrane is formed using dispersion of the solvent-ionophore in a binder as the supporting matrix. Useful binders include any of the hydrophobic natural or synethtic polymers capable of forming thin films of sufficient permeability to produce, in combination with the ionophores and carrier solvent, ionic mobility across the membrane. Useful polymers include poly(vinyl chloride); poly(vinylidene chloride); poly(acrylonitrile); polyurethanes, particularly aromatic polyurethanes; copolymers of vinyl chloride and vinylidene chloride; poly(vinyl butyral); poly(vinyl formal); poly(vinyl acetate); silicone elastomers; and copolymers of vinyl alcohol, cellulose esters and polycarbonates. Other useful polymers include carboxylated polymers of poly(vinyl chloride) and mixtures and copolymers of these materials. Membranes using these polymer binders including the ionophores and the carrier solvents are prepared using conventional film-coating or casting techniques.

The compositions of the present invention contain the described components over a wide range of concentrations or coverages. The coverage of ionophore varies with the particular ionophore used and the compound used to solvate the ionophore, as well as other factors. The preferred compositions comprise a hydrophobic binder having the solvent-ionophore dispersed therein. The compositions generally have a thickness in the range of from about 2 μm to about 20 μm. In these compositions, ionophore coverages of between about 0.1 $g/m^2$ and 2.0 $g/m^2$ are useful and coverages between 0.2 $g/m^2$ and 0.8 $g/m^2$ are preferred.

The carrier solvent is present in an amount sufficient to solvate the ionophore. The amount therefore

depends on the particular solvent and ionophore chosen. Generally, more solvent is used than is necessary to solvate the ionophore so that the ionophore remains solvated under a variety of storage conditions. A 100 percent or 500 percent excess on a weight basis is useful.

The amount of hydrophobic binder which is present is determined by the desired thickness of the membrane and by the necessity for providing support for the ionophore-solvent dispersion. Usually, the coverage of carrier solvent will be within the range of about 2 $g/m^2$ to 24 $g/m^2$.

In addition to the binder, hemispherand and solvent, the compositions of the present invention optionally contain other components such as surfactants and plasticizers.

As noted, surfactants are useful components of the described compositions. The surfactants serve a variety of functions including improving the coatability of the membrane composition and improving the solvation of the ionophore by the binder or solvent. Useful surfactants include nonionic surfactants such as the alkylaryl polyether alcohols (Tritons®) available from Rohm and Haas Co.; (*p*-isononylphenoxy)polyglycidol (Surfactant 10G®) available from Olin Mathieson Corp.; polyoxyethylene (20) oleyl ether (Brij 98®), polyoxyethylene sorbitan monolaurate (Tween 20®) and Span 80®, all available from Atlas Chemical Industries; poly(dimethyl-comethylphenyl siloxane) DC—510®) available from Dow Corning; Zonyl FSN® available from E. I. duPont; and fluorochemical surfactant FC134® available from 3M Co.

A useful ion-sensitive electrode comprises:

(a) a reference electrode in contact with

(b) a reference composition in contact with one side of

(c) an ion-sensitive membrane, which is the composition comprising a hemispherand compound, a compound capable of solvating the hemispherand compound, and a supporting matrix. In one embodiment, the ion-selective electrode is in the form of a glass tube. The ion-sensitive membrane forms the bottom of the tube. The tube is at least partially filled with a salt solution of known concentration forming the reference composition. Immersed in the refrence composition is a reference electrode which is a metal having a thin metal salt layer on its outer surface. The ion-sensitive electrode is used by immersing at least the membrane of the electrode in the unknown solution. One side of a voltmeter is connected to the metal of the reference electrode immersed in the reference composition and the other side is connected to a conducting probe in the unknown solution. The potential which develops across the voltmeter is proportional to othe difference in ion concentration between the unknown solution and the reference composition.

The compositions of the present invention are useful in a variety of electrode structures. For example, the compositions of the present invention are useful in place of, or in addition to, the glass ion-selective membrane of a conventional barrel-type electrode. Useful electrodes of this type are disclosed, for example, in U.S. Patents 3,598,713, 3,502,560, 3,562,129, 3,691,047, 3,753,887, 3,833,495, 3,671,414 and 3,743,588.

The hemispherand-containing composition of the present invention can be used as the membrane in a dry-operative ion-selective electrode as described in U.S. Patent 4,214,968 to Battaglia et al. There is provided a dry-operative ion-selective electrode comprising:

(a) a dried internal reference element comprising a reference electrode in contact with the dried residue of a solution of a salt and a hydrophilic polymeric binder in a solvent for the polymer and the salt and,

(b) in contact with the reference element, a hydrophobic ion-selective membrane of predetermined uniform thickness in regions thereof intended for contact with the sample for analysis, the membrane comprising a hydrophobic binder having distributed therein a hemispherand ion carrier dissolved in a carrier solvent.

The electrodes are made by a process using components which are described in U.S. Patent 4,214,968. As used throughout this specification, the expressions "dry-operative", "dried" and "uniform" have the meanings defined in the '968 patent.

Preparation of a Hemispherand

This procedure is a modification of the procedure of Cram et al referred to above. To a solution of ferric chloride (1 kg, 6 mole) in 3 liters of water was added a solution of *p*-creosol (115 g, 1.1 mole) in 19 liters of water. This solution was allowed to stand for 3 weeks. Filtration, followed by air-drying and titration of the solid with cyclohexane, gave crude trisphenol. A portion of the crude trisphenol was dissolved in chloroform and cooled to 0°C. To this solution bromine was added dropwise. As the addition neared completion, the product crystallized from the reaction mixture. Filtration, followed by rinsing with cold chloroform, gave the pure trisphenol dibromide.

A 2 molar solution of trisphenol dibromide in acetone was refluxed with 3.2 equivalents of potassium carbonate and 3.2 equivalents of ethyl iodide. The reaction was cooled, and the solvent removed to leave a paste which was slurried in dichloromethane. The dichloromethane solution was separated from the solid, dried over sodium sulfate, filtered and evaporated to leave a crude product, trisethoxydibromide.

To a solution of the trisethoxydibromide in diethyl ether at −78°C were added 2.2 equivalents of N,N,N'N'-tetramethylethylenediamine (TMEDA), followed by 2.2 equivalents of 2.4 molar normal butyl lithium in hexane. The solution was stirred at −78°C under nitrogen for 6 hours, followed by quenching with carbon dioxide gas. The mixture was allowed to warm to 0°C and acidified with concentrated

hydrochloric acid. The mixture was extracted twice with a 1:1 solution of ethyl acetate in ethyl ether. The combined organic layers were dried over sodium sulfate, filtered and evaporated to leave the crude product, the trisethoxydiacid, which was purified by trituration with hexane.

To a stirred solution of the trisalkoxydiacid in dry tetrahydrofuran (THF) were added 3 equivalents of $BH_3$·THF. The mixture was refluxed, then cooled to room temperature. Water was added, followed by a large excess of saturated potassium carbonate. The mixture was stirred, then extracted twice with ether. The combined organic layers were washed with water and brine, then dried over sodium sulfate plus magnesium sulfate. The solvent was removed to yield the product, a trisethoxydihydroxymethyl compound, which was used without further purification.

One equivalent of phosphorus tribromide was added to an anhydrous benzene solution of the desired trisalkoxydihydroxymethyl compound and stirred under nitrogen for 24 hours. The mixture was partitioned between saturated sodium bicarbonate and diethyl ether. The organic layer was washed with saturated sodium bicarbonate, water and brine, then dried over sodium sulfate and magnesium sulfate, filtered and evaporated. The crude product was purified by flash chromatography on silicon dioxide with a 1:1 solution of hexane and dichloromethane.

The final hemispherand product was prepared in the following manner. A solution containing both the trisalkoxydibromomethyl compound and dry diethylene glycol was added with a constant addition funnel to a refluxing solution of 2.2 equivalents sodium hydride in dry tetrahydrofuran over a 24-hour period. Refluxing was continued for 8 hours; then the reaction was cooled to room temperature and carefully quenched with water. The solvent was removed and the residue was partitioned between water and dichloromethane. The organic layer was dried over sodium sulfate and magnesium sulfate and evaporated. The crude hemispherand which resulted was subjected to gel permeation chromatography to separate the desired product from oligomeric material. The following product was obtained:

HS—1: 3,3″-oxybis(ethyleneoxymethylene)-2,2′,2″-trialkoxy-5,5′5‴-trimethyl-1,1′:3′,1″terphenyl (mp 160.5—162°C, structure confirmed by NMR, mass spectrum, elemental analysis and X-ray analysis).

In a similar manner, the corresponding propoxy (HS2) and isopropoxy (HS3), mp = 164—166°C, were prepared. Structures were confirmed by NMR, mass spectrum and elemental analysis.

Electrode Format

Ion-selective electrodes were prepared using a variety of hemispherands described above, as well as a comparative compound. The electrodes were of the format and were prepared by the methods described by Battaglia et al in their U.S. patent referenced above. The electrode comprised a polyester support having layers in sequence as follows: silver/silver chloride reference electrode; electrolyte layer comprising gelatin (3—6 g/m$^2$, NaCl (1.5—3.5 g/m$^2$), glycercol (0.25—0.4 g/m$^2$) and Olin Surfactant 10G®) (0.3—0.9 g/m$^2$); and the membrane layer.

The membrane layer contained: a binder comprising 1.8% carboxylated poly(vinyl chloride) (3.0—6.0 g/m$^2$), a carrier solvent as indicated (4—8 g/m$^2$), the hemispherand or a comparative compound as indicated, and the surfactant DC—510® (0.03—0.09 g/m$^2$).

The following examples are presented.

## Examples 1—15

A hemispherand and a carrier solvent were incorporated in the membrane layer of the electrode described above. The electrodes were tested by spotting 10 µl aliquots of solutions containing 0.05, 0.10, 0.15 or 0.30 M sodium chloride and 0.10 M KCl, LiCl, $NH_4Cl$, $CaCl_2$ or $MgCl_2$ onto samples of the electrode. Potentials were measured against a silver/silver chloride electrode. The potential developed for each aliquot was plotted against the concentration of sodium in the aliquot. The result was a Nernstian slope in the range of $10^{-5}$ to $10^{-1}$ M sodium for each experiment.

For each experiment, the selectivity coefficients (K) for each of the anions other than sodium were calculated (sodium being defined as one) using the potential data from the appropriate aliquot. The results are shown in Table 1. Making the assumption that ionic mobilities of the ion complex in the membrane are not appreciably different, then the selectively coefficient Ka is related to the ΔΔG by the following formula: ΔΔG= −RT ln l/Ka. In the table, BEHS is bis(2-ethylhexyl) sebacate, ONPV is *o*-nitrophenyl valerate and NPOE is *o*-nitrophenyl octyl ether. In Example 1, the ΔΔG for $Na^+$ over $K^+$ is −RT ln l/0.36 which is equal to 0.6 kcal. A ΔΔG of 0.3 kcal corresponds to a K of 0.7.

TABLE 1

| Example | Hemis-pherand | Solvent | Selectivity Coefficients Na+ | K | Li+ | $NH_4^+$ | $Ca^{++}$ | $Mg^{++}$ |
|---|---|---|---|---|---|---|---|---|
| 1 | HS 1 | BEHS | 1 | 0.36 | 0.006 | 0.009 | 0.006 | 0.0004 |
| 2 | HS 2 | BEHS | 1 | 0.52 | 0.003 | 0.014 | 0.017 | 0.001 |
| 3 | HS 5 | BEHS | 1 | 0.14 | 0.004 | 0.009 | 0.022 | 0.002 |
| 4 | HS 6 | BEHS | 1 | 0.13 | 0.003 | 0.006 | 0.006 | 0.0007 |
| 5 | HS 7 | BEHS | 1 | 0.05 | 0.005 | 0.006 | 0.008 | 0.0005 |
| 6 | HS 4 | BEHS | 1 | 0.32 | 0.17 | 0.008 | 0.013 | 0.0004 |
| 7 | HS 20 | BEHS | 1 | 0.58 | 0.004 | 0.015 | 0.001 | 0.0006 |
| 8 | HS 21 | BEHS | 1 | 0.011 | 0.004 | 0.003 | 0.006 | 0.0008 |
| 9 | HS 22 | BEHS | 1 | 0.12 | 0.004 | 0.009 | 0.006 | 0.0001 |
| 10 | HS 23 | BEHS | 1 | 0.008 | 0.006 | 0.001 | 0.005 | 0.00008 |
| 11 | HS 24 | BEHS | 1 | 0.02 | 0.005 | 0.002 | 0.007 | 0.0003 |
| 12 | HS 25* | BEHS | .005 | 1 | 0.003 | 0.09 | 0.005 | 0.0002 |
| 13 | HS 2 | NPOE | 1 | 0.53 | 0.005 | 0.01 | 0.007 | 0.0007 |
| 14 | HS 7 | NPOE | 1 | 0.06 | 0.004 | 0.004 | 0.006 | 0.0006 |
| 15 | HS 7 | ONPV | 1 | 0.09 | 0.009 | 0.009 | 0.008 | 0.003 |

*$K^+$ selective

The fact that each ion-selective electrode exhibited a Nernstian potential plot over a wide range of sodium concentration establishes that each of the hemispherands is functioning as a transporter of ions. The selectivity of these particular hemispherands for sodium is established by the fact that each of the other ions tested exhibited a selectivity coefficient less than that for sodium.

Comparative Example

Example 1 was repeated except that a spherand was substituted for the hemispherand in the membrane layer. The spherand had the structure:

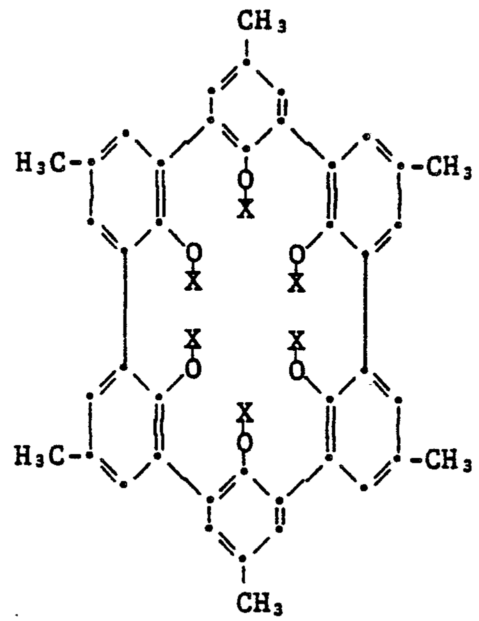

X = $CH_3$

A plot of the potential vs. the concentration of sodium in the aliquot showed no response.

## Claims

1. An ion-sensitive composition, particularly for use in an ion-sensitive electrode, including an ionophore, a compound capable of solvating the ionophore and a supporting matrix, characterized in that said ionophore is a lipophilic hemispherand compound.

2. A composition according to claim 1 characterized in that said composition is capable of selectively transporting a first metal ion in preference to a second metal ion, wherein said lipophilic hemispherand compound has a ΔG of complexation with said first ion which is at least 0.3 kcal/mole greater than the ΔG of complexation with said second ion.

3. An ion-sensitive electrode comprising

(a) a reference electrode in contact with

(b) a reference composition in contact with one side of

(c) an ion-sensitive membrane characterized in that said membrane is a composition according to claim 1 or 2.

4. A dry operative ion-selective electrode comprising:

(a) a dried internal reference element comprising a reference electrode in contact with the dried residue of a solution of a salt and a hydrophilic polymeric binder in a solvent for the polymer and the salt and,

(b) in contact with said reference element, a hydrophobic ion-selective membrane of predetermined uniform thickness in regions thereof intended for contact with a sample for analysis, characterized in that said membrane is a composition according to claim 2.

5. The subject matter of any previous claim characterized in that said compound capable of solvating the ionophore is a hydrophobic carrier solvent.

6. The subject matter of any previous claim characterized in that said hemispherand is represented by the structural formula:

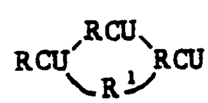

wherein each RCU is a rigid cyclic unit individually selected from the group consisting of units of the structure:

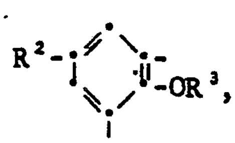,
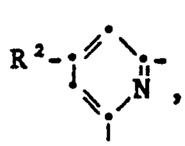,
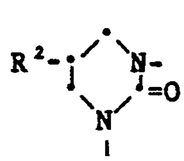
and
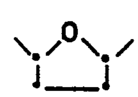

wherein

$R^2$ is hydrogen or a group selected from alkyl, including substituted alkyl; alkenyl, including substituted alkenyl; cycloalkyl, including substituted cycloalkyl; aryl, including substituted aryl; and alkyl, alkenyl, cycloalkyl and aryl groups containing heteroatoms or containing heteroatom substituents;

$R^3$ is an alkyl, including substituted alkyl, or alkenyl, including substituted alkenyl, group or, when taken together with an $R^3$ group from another RCU, forms an alkylene group or an alkylene group interrupted with heteroatoms; and

$R^1$ represents the atoms necessary to complete a macrocyclic ring structure, with the proviso that $R^1$ contains (a) at least one coordinating site for ions and (b) at least two alkylene groups as part of the ring structure.

7. The subject matter of any previous claim characterized in that said hemispherand compound is selected from the group consisting of:

3,3″-oxybis(ethyleneoxymethylene)-2,2′,2″-trimethoxy-5,5′,5″-trimethyl-1,1′:3′,1″-terphenyl,

3,3″-oxybis(ethyleneoxymethylene)-2,2″-ethoxy-2′-propoxy-5,5′,5‴-trimethyl-1,1′:3′1″-terphenyl,

3,3″-oxybis(ethyleneoxymethylene)-2′-methoxy-2,2″-trimethylenedioxy-5,5′,5″-trimethyl-1,1′:3′1″-terphenyl,

3,3″-oxybis(ethyleneoxymethylene)-2,2″-pentamethylenedioxy-2′-ethoxy-5,5′,5″-trimethyl-1,1′:3′1″-terphenyl and

3,3″-oxybis(ethyleneoxymethylene)-2,2″-pentamethylenedioxy-2′-allyloxy-5,5′,5″-trimethyl-1,1′:3′1″-terphenyl.

8. The subject matter of claim 2 or 4 wherein said first ion is sodium and said second ion is potassium.

9. The subject matter of claim 2 or 4 wherein said hemispherand has a ΔG of complexation with sodium which is at least 0.5 kcal/mole greater than the ΔG of complexation with potassium.

10. The subject matter of any previous claim characterized in that the compound capable of solvating the hemispherand compound is selected from the group consisting of phthalates, sebacates, aromatic and aliphatic ethers, phosphates, mixed aromatic-aliphatic phosphates, adipates and nitrated ether or esters.

11. The subject matter of any previous claim characterized in that said supporting matrix is porous glass.

12. The subject matter of any previous claim characterized in that said supporting matrix is a hydrophobic polymer.

13. The subject matter of any previous claim characterized in that the composition or electrode comprises a surfactant.

**Patentansprüche**

1. Ionenempfindliche Zusammensetzung, insbesondere für die Verwendung in einer gegenüber Ionen empfindlichen Elektrode, mit einem Ionophor, einer Verbindung, die das Ionophor zu solvatisieren vermag und mit einer trägermatrix, dadurch gekennzeichnet, daß das Ionophor eine lipophile Hemisphärandenverbindung ist.

2. Zusammensetzung nach Anspruch 1, dadurch gekennzeichnet, daß die Zusammensetzung selektiv ein erstes Metallion bevorzugt gegenüber einem zweiten Metallion zu transportieren vermag, wobei die lipophile Hemisphärandenverbindung durch einen Komplexbildungsenergiewert ΔG mit dem ersten Ion gekennzeichnet, ist, der um mindestens 0,3 Kcal/Mol größer ist als der Komplexbildungsenergiewert ΔG mit dem zweiten Ion.

3. Ionenempfindliche Elektrode mit

(a) einer Bezugselektrode in Kontakt mit

(b) einer Bezugs-Zusammensetzung in Kontakt mit einer Seite von

(c) einer gegenüber Ionen empfindlichen Membran,

dadurch gekennzeichnet, daß die Membran eine Zusammensetzung nach Anspruch 1 oder 2 ist.

4. Trocken arbeitende, gegenüber Ionen selektive Elektrode mit:

(a) einem getrockneten internen Bezugselement mit einer Bezugselektrode in Kontakt mit dem getrockneten Rest einer Lösung eines Salzes und eines hydrophilen polymeren Bindemittels in einem Lösungsmittel für das Polymer und das Salz und

(b) einer hydrophoben, gegenüber Ionen selektiven Membran von vorbestimmter gleichförmiger Dicke in Bereichen derselben, die für einen Kontakt mit einer Analyseprobe bestimmt sind, in Kontakt mit dem Besugselement, dadurch gekennzeichnet, daß die Membran eine Zusammensetzung nach Anspruch 2 ist.

5. Der Gegenstand nach einem der vorstehenden Ansprüche, dadurch gekennzeichnet, daß die Verbindung, die das Ionophor zu solvatisieren vermag, ein hydrophobes Trägerlösungsmittel ist.

6. Der Gegenstand nach einem der vorstehenden Ansprüche, dadurch gekennzeichnet, daß der Hemiphärand der folgenden Strukturformel entspricht:

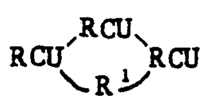

in der jede RCU-Gruppierung eine starre cyclische Einheit ist, die einzeln aus der folgenden Gruppe von Einheiten ausgewählt ist:

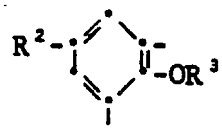, 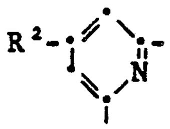, 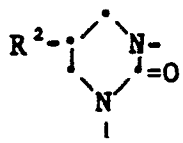 and 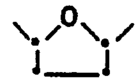

worin bedeuten:

$R^2$ ein Wasserstoffatom oder eine gegebenenfalls substituierte Alkyl-, gegebenenfalls substituierte Alkenyl-, gegebenenfalls substituierte Cycloalkyl- oder gegebenenfalls substituierte Arylgruppe oder eine Alkyl-, Alkenyl-, Cycloalkyl- oder Arylgruppe mit Heteroatomen oder Heteroatomsubstituenten;

$R^3$ eine gegebenenfalls substituierte Alkyl- oder gegebenenfalls substituierte Alkenylgruppe oder gemeinsam mit einer $R^3$-Gruppe von einer anderen RCU-Gruppierung eine Alkylengruppe oder eine von Heteroatomen unterbrochene Alkylengruppe und

$R^1$ die Atome, die zur Vervollständigung einer makrocyclischen Ringstruktur erforderlich sind, wobei gilt, daß $R^1$ enthält (a) mindestens ein Koordinationszentrum für Ionen und (b) mindestens zwei Alkylengruppen als Teil der Ringstruktur.

7. Der Gegenstand nach einem der vorstehenden Ansprüche, dadurch gekennzeichnet, daß die Hemisphärandenverbindung aus der Gruppe folgender Verbindungen ausgewählt ist:

3,3″-Oxybis(ethylenoxymethylen)-2,2′,2″-trimethoxy-5,5′,5″-trimethyl-1,1′:3′,1″-terphenyl;

3,3″-Oxybis(ethylenoxymethylen)-2,2″-ethoxy-2′-propoxy-5,5′,5‴-trimethyl-1,1′:3′,1″-terphenyl;

3,3″-Oxybis(ethylenoxymethylen)-2′-methoxy-2,2″-trimethylendioxy-5,5′,5″-trimethyl-1,1′:3′,1″-terphenyl;

3,3″-Oxybis(ethylenoxymethylen)-2,2″-pentamethylendioxy-2′-ethoxy-5,5′,5″-trimethyl-1,1′:3′1″-terphenyl und

3,3″-Oxybis(ethylenoxymethylen)-2,2″-pentamethylendioxy-2′-allyloxy-5,5′,5″-trimethyl-1,1′:3′1″-terphenyl.

8. Der Gegenstand nach Anspruch 2 oder 4, dadurch gekennzeichnet, daß das erste Ion aus Natrium und das zweite Ion aus Kalim besteht.

9. Der Gegenstand nach Anspruch 2 oder 4, dadurch gekennzeichnet, daß der Hemisphärand einen Komplexbildungsenergiewert ΔG mit Natrium aufweist, der um mindestens 0,5 Kcal/Mol größer ist als der Komplexbildungsenergiewert ΔG mit Kalium.

10. Der Gegenstand nach einem der vorstehenden Ansprüche , dadurch gekennzeichnet, daß die Verbindung, die die Hemisphärandenverbindung zu solvatisieren vermag, aus der folgenden Gruppe von Verbindungen ausgewählt ist: Phthalaten, Sebacaten, aromatischen und aliphatischen Ethern, Phosphaten, gemischten aromatischaliphatischen Phosphaten, Adipaten und Ethern unn Estern mit einer $—NO_2$ Gruppe.

11. Der Gegenstand nach einem der vorstehenden Ansprüche, dadurch gekennzeichnet, daß die Trägermatrix aus porösem Glas besteht.

12. Der Gegenstand nach einem der vorstehenden Ansprüche, dadurch gekennzeichnet, daß die Trägermatrix aus einem hydrophoben Polymer besteht.

13. Der Gegenstand nach einem der vorstehenden Ansprüche, dadurch gekennzeichnet, daß die Zusammensetzung oder Elektrode eine oberflächenaktive Verbindung enthält.

## Revendications

1. Composition sensible à un ion, utilisable en particulier dans une électrode sensible à un ion, comprenant un ionophore, un composé capable de solvater l'ionophore, et une matrice support, caractérisé en ce que le dit ionophore est un composé hémisphérand lipophile.

2. Composition selon la revendication 1, caractérisée en ce qu'elle peut transporter sélectivement un premier ion métallique de préférence à un second ion métallique et dans laquelle le composé hémisphérand lipophile a un ΔG de complexation avec le premier ion qui est au moins de 0,3 kcal/mole supérieur au ΔG de complexation avec le second ion.

3. Electrode sensible à un ion comprenant:

(a) une électrode de référence en contact avec

(b) une composition de référence en contact avec un côté de

(c) une membrane sensible à un ion, caractérisée en ce que la dite membrane est une composition selon la revendication 1 ou 2.

4. Electrode sélective pour un ion, fonctionnant à sec, comprenant:

(a) un élément de référence interne séché comprenant une électrode de référence en contact avec le résidu séché d'une solution d'un sel et d'un liant polymère hydrophile dans un solvant pour le polymère et le sel, et,

(b) en contact avec cet élément de référence, une membrane hydrophobe sélective pour un ion, ayant une épaisseur uniforme prédéterminée dans ses prties prévues pour être en contact avec un échantillon à analyser, caractérisé en ce que la dite membrane est une composition selon la revendication 2.

5. L'objet d'une quelconque des revendications précédentes caractérisé en ce que le composé capable de solvater l'ionophore est un solvant porteur hydrophobe.

6. L'objet d'une quelconque des revendications précédentes, caractérisé en ce que l'hémisphérand est représenté par la formule structurale:

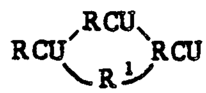

où chacun des groupes RCU est un motif cyclique rigide choisi individuellement parmi les motifs de structure:

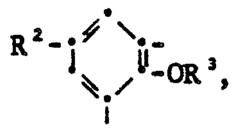, 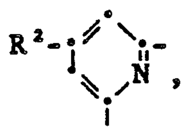, 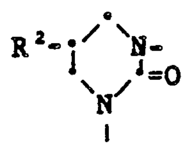 and 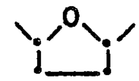

où

$R^2$ est un atome d'hydrogène ou un grope choisi parmi les groupes alkyle, y compris alkyle substitué, alkényle, y compris alkényle substitué, cycloalkyl, y compris cycloakyle substitué, aryle, y compris aryle substitué; les groupes alkyle, alkényle, cycloalkyle et aryle contenant des hétéroatomes ou des substituants formés d'hétéroatomes;

$R^3$ est un groupe alkyle, y compris alkyle substitué, ou alkényle, y compris alkényle substitué, ou, pris avec un groupe $R^3$ d'un autre motif RCU, forme un groupe alkylène ou un groupe alkylène interrompu par des hétéroatomes; et

$R^1$ représente les atomes nécessaires pour compléter une structure macrocyclique, pourvu que $R^1$ contienne: (a) au moins un site de coordination pour des ions et (b) au moins deux groupes alkylène faisant partie de la structure cyclique.

7. L'objet d'une quelconque des revendications précédentes, caractérisé en ce que le dit hémisphérand est choisi parmi les composés suivants:

3,3″-oxybis(éthylèneoxyméthylène)-2,2′,2″-triméthoxy-5,5′,5″-triméthyl-1,1′:3′,1″-terphényl,

3,3″-oxybis(éthylèneoxyméthylène)-2,2″-éthoxy-2′-propoxy-5,5′5‴-triméthyl-1,1′:3′1″-terphenyl,

3,3″-oxybis(éthylèneoxyméthylène)-2′-méthoxy-2,2″-triméthylènedioxy-5,5′,5″-triméthyl-1,1′:3′,1″-terphényl,

3,3″-oxybis(éthylèneoxyméthylène)-2,2″-pentaméthylènedioxy-2′-éthoxy-5,5′,5″-triméthyle-1,1′:3′1″-terphényl et

3,3″-oxybis(éthylèneoxyméthylène)-2,2″-pentaméthylène-dioxy-2′-allyloxy-5,5′,5″-triméthyl-1,1′:3′1″-terphényl.

8. L'objet des revendications 2 ou 4, dans lequel le premier ion est le sodium et le second ion est le potassium.

9. L'objet des revendications 2 ou 4, dans lequel l'hémisphérand a un ΔG de complexation avec le sodium qui est au moins de 0,5 kcal/mole supérieur à son ΔG de complexation avec le potassium.

10. L'objet d'une quelconque des revendications précédentes, caractérisé en ce que le composé capable de solvater l'hémisphérand est choisi dans le groupe formé par les phtalates, les sébaçates, les éthers aromatiques et aliphatiques, les phosphates, les phosphates mixtes aromatiques-aliphatiques, les adipates et les éthers ou les esters nitrés.

11. L'objet d'une quelconque des revendications précédentes caractérisé en ce ue la matrice support est du verre poreux.

12. L'objet d'une quelconque des revendications précédentes, caractérisé en ce que la matrice support est un polymère hydrophobe.

13. L'objet d'une quelconque des revendications précédentes, caractérisé en ce que la composition ou l'électrode comprend un agent tensioactif.